# EUROPEAN PATENT APPLICATION

(11) **EP 4 528 400 A1**
(43) Date of publication of application: **26.03.2025**
(21) Application number: 23859190.3
(22) Date of filing: 21.08.2023
(51) Int. Cl.: G05B 15/02, H04L 12/28

(54) **SMART DEVICE CONTROL METHOD AND ELECTRONIC DEVICE**

(30) Priority: 29.08.2022 CN 202211042224
(71) Applicant: Huawei Technologies Co., Ltd., Shenzhen, Guangdong 518129 (CN)
(72) Inventor: XU, Tianliang, Shenzhen, Guangdong 518129 (CN); WAN, Yuecheng, Shenzhen, Guangdong 518129 (CN); HE, Yongzhe, Shenzhen, Guangdong 518129 (CN)
(74) Representative: Maiwald GmbH
(86) International application number: PCT/CN2023/113991
(87) International publication number: WO 2024/046156

(57) **Abstract**

This application provides a smart device control method and an electronic device. The method includes: receiving a batch-control instruction, where the batch-control instruction is used to control N smart devices to perform a target operation, the batch-control instruction carries identifiers of the N smart devices, and N is an integer greater than 1; selecting, based on the identifiers of the N smart devices, M smart device groups from created smart device groups, where each of the M smart device groups includes one or more smart devices, the one or more smart devices included in each smart device group are a subset of the N smart devices, and M is an integer greater than 0; and sending M group-control instructions to the M smart device groups, so that the M smart device groups separately perform the target operation. According to the method, an electronic device that receives the batch-control instruction can flexibly control the N smart devices in batches.

## Description

This application claims priority to Chinese Patent Application No. 202211042224.X, filed with the China National Intellectual Property Administration on August 29, 2022 and entitled "SMART DEVICE CONTROL METHOD AND ELECTRONIC DEVICE", which is incorporated herein by reference in its entirety.

### TECHNICAL FIELD

This application relates to the field of communication technologies, and in particular, to a smart device control method and an electronic device.

### BACKGROUND

An internet of things (internet of things, IoT), namely, an "internet of interconnected things", is a network extended and expanded based on the internet, and a huge network formed by combining various information sensing devices with the network, to implement interconnections between people, machines, and things anytime and anywhere. An application field of the internet of things relates to various aspects. For example, the application field of the internet of things includes a smart home, smart transportation, public security, and the like.

In many cases, smart devices in the internet of things need to be controlled in batches. For example, in the field of smart homes, a plurality of smart lamps may be controlled in batches, to turn on the plurality of smart lamps at the same time, thereby avoiding a chasing effect. The chasing effect means that a user sees that the smart lamps are turned on one by one. It usually takes a long time to turn on all the plurality of smart lamps. This affects user experience.

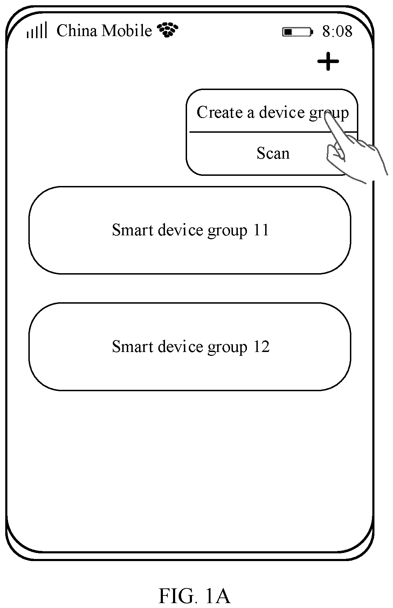

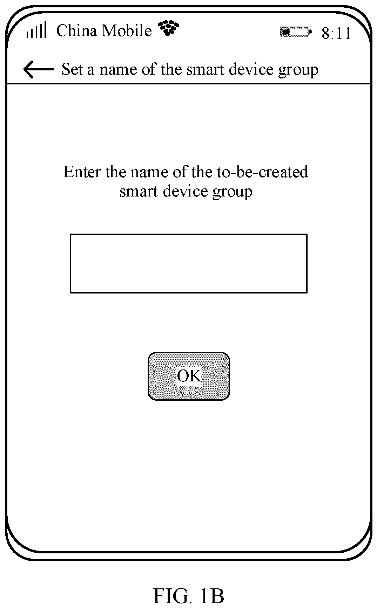

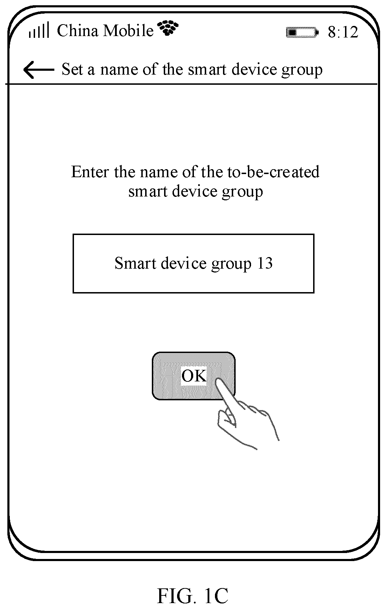

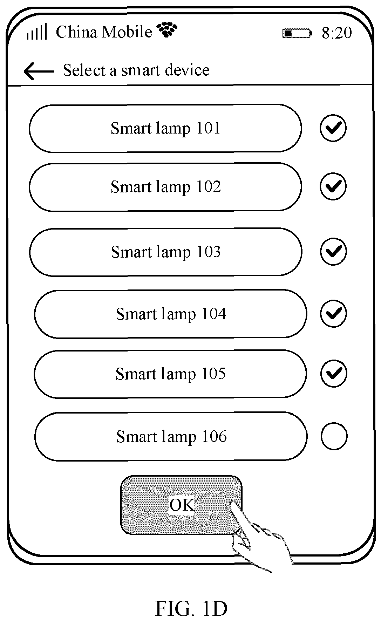

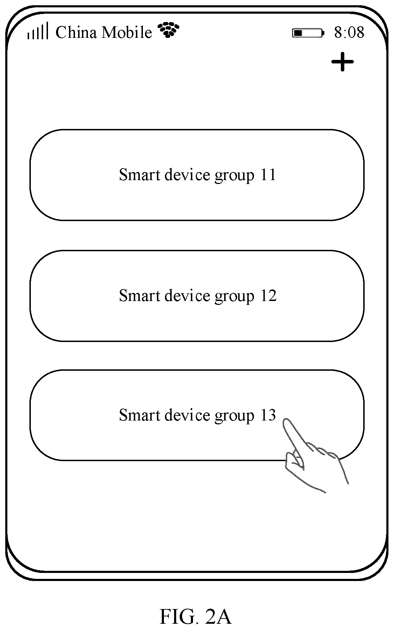

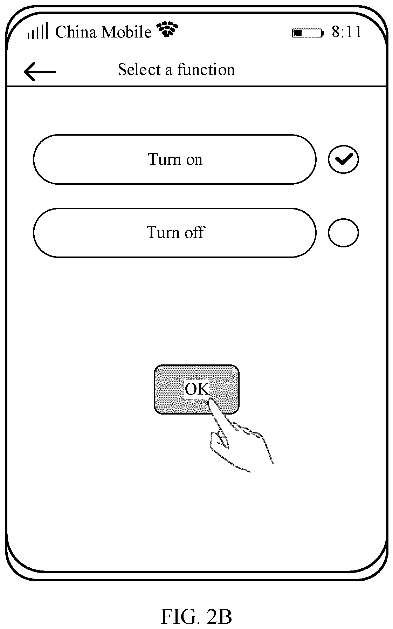

Currently, if the user wants to control a plurality of smart devices in the internet of things in batches, the user needs to group the smart devices on an application (application, APP). In this way, the user can select a smart device group to perform batch control. For example, a smart home app is used as an example. As shown in FIG. 1A to FIG. 1D, if the user needs to control a smart lamp 101 to a smart lamp 105 in batches, the user may tap "Create a smart device group" on the smart home app, and then enter a name of the smart device group that needs to be created. The user sets the name of the smart device group to smart device group 13, and then taps an "OK" button. After tapping the "OK" button, the user may select to add the smart lamp 101 to the smart lamp 105 to the smart device group 13, and then tap an "OK" button. After receiving a creation confirmation instruction, the app notifies a gateway to create the smart device group 13. As shown in FIG. 2A and FIG. 2B, after the smart device group 13 is created, the user may select the smart device group 13, and then tap a "Turn on" function button. After receiving a turn-on instruction, the app sends the turn-on instruction to the gateway. The turn-on instruction carries an identifier of the smart device group 13. The gateway multicasts the turn-on instruction to the smart device group 13 based on a multicast address corresponding to the smart device group 13. In this way, the smart lamps in the smart device group 13 can be turned on at the same time.

It can be learned that, in this batch control manner, the user needs to create a device group in advance for smart devices that need to be controlled in batches. If the user does not create a device group in advance for the smart devices that need to be controlled in batches, the user cannot control these smart devices in batches. Therefore, according to an existing device control method, the devices cannot be flexibly controlled in batches.

### SUMMARY

This application provides a smart device control method and an electronic device, to help flexibly control smart devices in batches.

According to a first aspect, this application provides a smart device control method, applied to a first electronic device. The method includes: receiving a batch-control instruction, where the batch-control instruction is used to control N smart devices to perform a target operation, the batch-control instruction carries identifiers of the N smart devices, and N is an integer greater than 1; selecting, based on the identifiers of the N smart devices, M smart device groups from created smart device groups, where each of the M smart device groups includes one or more smart devices, the one or more smart devices included in each smart device group are a subset of the N smart devices, and M is an integer greater than 0; and sending M group-control instructions to the M smart device groups, so that the M smart device groups separately perform the target operation.

According to the method described in the first aspect, when the first electronic device receives the batch-control instruction used to control the N smart devices to perform the target operation, even if a smart device group including only the N smart devices is not created in advance on the first electronic device, the first electronic device can flexibly control the N smart devices in batches.

In a possible implementation, if a remaining smart device other than the M smart device groups exists in the N smart devices, a single-control instruction may be further sent to the remaining smart device, so that the remaining smart device performs the target operation. The remaining smart device does not belong to any created smart device group, or a smart device included in a created smart device group to which the remaining smart device belongs does not belong to the subset of the N smart devices. Based on this possible implementation, the first electronic device may preferentially perform group control, and then perform single control. This avoids a chasing effect to some extent.

In a possible implementation, the M smart device groups are selected from the created smart device groups according to a shortest path principle, and the shortest path principle is a principle of minimizing a sum of quantities of sent group-control instructions and single-control instructions. Based on this possible implementation, the chasing effect is reduced.

In a possible implementation, an i^{th} selected smart device group in the M smart device groups is a smart device group that is in one or more target device groups and that includes a largest quantity of smart devices that are not selected to perform the target operation, the target device group is a smart device group in the created smart device groups, a smart device included in the target device group belongs to the subset of the N smart devices, and i is an integer greater than 0 and less than or equal to M. Based on this possible implementation, the sum of the quantities of delivered group-control instructions and single-control instructions can be minimized to reduce the chasing effect.

In a possible implementation, the created smart device groups include a smart device group created based on a tag of a smart device. Based on this possible implementation, the smart device group can be automatically created based on the smart device tag. This is more intelligent.

In a possible implementation, the first electronic device may further perform the following steps: receiving device information sent by a second electronic device, where the device information includes identifiers of P smart devices and a tag corresponding to each of the P smart devices, and P is an integer greater than 0; and creating, based on the tag corresponding to each smart device, a smart device group corresponding to the tag, where a smart device in the P smart devices is included in a smart device group corresponding to a tag of the smart device. Based on this possible implementation, the smart device group can be automatically created based on the smart device tag. This is more intelligent.

In a possible implementation, the first electronic device may further perform the following steps: receiving a device adding instruction, where the device adding instruction indicates to add a target smart device and indicates a tag of the target smart device; in response to the device adding instruction, adding the target smart device to the first electronic device; and if a smart device group corresponding to the tag of the target smart device exists, adding the target smart device to the smart device group corresponding to the tag of the target smart device; or if a smart device group corresponding to the tag of the target smart device does not exist, creating the smart device group corresponding to the tag of the target smart device, where the target smart device is included in the smart device group corresponding to the tag of the target smart device. Based on this possible implementation, the smart device group can be automatically created based on the smart device tag. This is more intelligent.

In a possible implementation, the first electronic device may further perform the following steps: receiving group information sent by a second electronic device, where the group information includes identifiers of Q smart device groups created by the second electronic device based on a tag of a smart device and an identifier of a smart device included in each of the Q smart device groups, and Q is a positive integer; and creating the Q smart device groups based on the group information. Based on this possible implementation, the smart device group can be automatically created. This is more intelligent.

In a possible implementation, the tag includes one or more of the following: a room in which the smart device is mounted, a mounting position of the smart device, an illumination area of the smart device, a type of the smart device, or a function of the smart device.

In a possible implementation, after receiving the batch-control instruction, the first electronic device may further perform the following steps:
in response to the batch-control instruction, determining whether a first group exists in the created smart device groups, where the first group includes the N smart devices and does not include a device other than the N smart devices; and if the first group does not exist in the created smart device groups, creating the first group; or if the first group exists in the created smart device groups, delivering a group-control instruction to the first group, so that the first group performs the target operation. A specific implementation of the selecting, based on the identifiers of the N smart devices, M smart device groups from created smart device groups is: if the first group does not exist in the created smart device groups, selecting, based on the identifiers of the N smart devices, the M smart device groups from the created smart device groups.

Based on this possible implementation, when the first electronic device receives the batch-control instruction used to control the N smart devices to perform the target operation, even if the first group that includes only the N smart devices is not created in advance on the first electronic device, the first electronic device may automatically create the first group, so that the first electronic device can directly perform group control on the first group next time, thereby avoiding a chasing effect. In addition, even if the first group is not created in advance on the first electronic device, group control can be performed. This avoids the chasing effect to some extent.

In a possible implementation, a specific implementation of the creating the first group is: if a quantity of the created smart device groups does not meet a threshold condition, creating the first group. This possible implementation helps avoid insufficient storage space caused by an excessive quantity of smart device groups created on the first electronic device.

In a possible implementation, if the quantity of the created smart device groups meets the threshold condition, the first electronic device may create the first group after a created second group is deleted. The second group is one of the created smart device groups. This possible implementation helps avoid insufficient storage space caused by an excessive quantity of smart device groups created on the first electronic device.

In a possible implementation, the second group is a smart device group that is in the created smart device groups and that executes the group-control instruction for a smallest quantity of times. This possible implementation helps avoid a case in which the first electronic device deletes a smart device group frequently used by a user, and consequently the deleted smart device group is subsequently re-created.

Optionally, if a plurality of smart device groups in the created smart device groups execute the group-control instruction for a smallest quantity of times, the second group is a smart device group that is in the plurality of smart device groups and that is created earliest. This possible implementation helps avoid a case in which the first electronic device deletes a smart device group frequently used by a user, and consequently the deleted smart device group is subsequently re-created.

In a possible implementation, the second group is a smart device group that is in the created smart device groups and that executes the group-control instruction for a smallest quantity of times within a recent preset time period. This possible implementation helps avoid a case in which the first electronic device deletes a smart device group frequently used by a user, and consequently the deleted smart device group is subsequently re-created.

Optionally, if a plurality of smart device groups in the created smart device groups execute the group-control instruction for the smallest quantity of times within a recent preset time period, the second group is a smart device group that is in the plurality of smart device groups and that is created earliest. This optional implementation helps avoid a case in which the first electronic device deletes a smart device group frequently used by a user, and consequently the deleted smart device group is subsequently re-created.

According to a second aspect, this application provides a smart device control method, applied to a first electronic device. The method includes:
receiving a batch-control instruction, where the batch-control instruction is used to control N smart devices to perform a target operation, the batch-control instruction carries identifiers of the N smart devices, and N is an integer greater than 1; in response to the batch-control instruction, determining whether a first group exists in the created smart device groups, where the first group includes the N smart devices and does not include a device other than the N smart devices; and if the first group does not exist in the created smart device groups, creating the first group; or if the first group exists in the created smart device groups, delivering a group-control instruction to the first group, so that the first group performs the target operation.

According to the method described in the second aspect, when the first electronic device receives the batch-control instruction used to control the N smart devices to perform the target operation, even if the first group that includes only the N smart devices is not created in advance on the first electronic device, the first electronic device may automatically create the first group, so that the first electronic device can directly perform group control on the first group next time, thereby avoiding a chasing effect.

In a possible implementation, a specific implementation of the creating the first group is: if a quantity of the created smart device groups does not meet a threshold condition, creating the first group. This possible implementation helps avoid insufficient storage space caused by an excessive quantity of smart device groups created on the first electronic device.

In a possible implementation, if the quantity of the created smart device groups meets the threshold condition, the first electronic device may create the first group after a created second group is deleted. The second group is one of the created smart device groups. This possible implementation helps avoid insufficient storage space caused by an excessive quantity of smart device groups created on the first electronic device.

In a possible implementation, the second group is a smart device group that is in the created smart device groups and that executes the group-control instruction for a smallest quantity of times. This possible implementation helps avoid a case in which the first electronic device deletes a smart device group frequently used by a user, and consequently the deleted smart device group is subsequently re-created.

In a possible implementation, if a plurality of smart device groups in the created smart device groups execute the group-control instruction for a smallest quantity of times, the second group is a smart device group that is in the plurality of smart device groups and that is created earliest. This possible implementation helps avoid a case in which the first electronic device deletes a smart device group frequently used by a user, and consequently the deleted smart device group is subsequently re-created.

In a possible implementation, the second group is a smart device group that is in the created smart device groups and that executes the group-control instruction for a smallest quantity of times within a recent preset time period. This possible implementation helps avoid a case in which the first electronic device deletes a smart device group frequently used by a user, and consequently the deleted smart device group is subsequently re-created.

Optionally, if a plurality of smart device groups in the created smart device groups execute the group-control instruction for the smallest quantity of times within a recent preset time period, the second group is a smart device group that is in the plurality of smart device groups and that is created earliest. This optional implementation helps avoid a case in which the first electronic device deletes a smart device group frequently used by a user, and consequently the deleted smart device group is subsequently re-created.

In a possible implementation, if the first group does not exist in the created smart device groups, the first electronic device may further send a single-control instruction to the N smart devices, so that the N smart devices separately perform the target operation. Because it may take a long time to create the first group, if group control is performed on the first group after the first group is created, a waiting time of a user may be excessively long. Therefore, if the first group does not exist in the created smart device groups, single-control may be performed on the N smart devices, to reduce the waiting time of the user.

According to a third aspect, this application provides a smart device control apparatus. The apparatus includes: a receiving unit, configured to receive a batch-control instruction, where the batch-control instruction is used to control N smart devices to perform a target operation, the batch-control instruction carries identifiers of the N smart devices, and N is an integer greater than 1; a processing unit, configured to select, based on the identifiers of the N smart devices, M smart device groups from created smart device groups, where each of the M smart device groups includes one or more smart devices, the one or more smart devices included in each smart device group are a subset of the N smart devices, and M is an integer greater than 0; and a sending unit, configured to send M group-control instructions to the M smart device groups, so that the M smart device groups separately perform the target operation.

In a possible implementation, the sending unit is further configured to: if a remaining smart device other than the M smart device groups exists in the N smart devices, send a single-control instruction to the remaining smart device, so that the remaining smart device performs the target operation. The remaining smart device does not belong to any created smart device group, or a smart device included in a created smart device group to which the remaining smart device belongs does not belong to the subset of the N smart devices.

In a possible implementation, the M smart device groups are selected from the created smart device groups according to a shortest path principle, and the shortest path principle is a principle of minimizing a sum of quantities of sent group-control instructions and single-control instructions.

In a possible implementation, an i^{th} selected smart device group in the M smart device groups is a smart device group that is in one or more target device groups and that includes a largest quantity of smart devices that are not selected to perform the target operation, the target device group is a smart device group in the created smart device groups, a smart device included in the target device group belongs to the subset of the N smart devices, and i is an integer greater than 0 and less than or equal to M.

In a possible implementation, the created smart device groups include a smart device group created based on a tag of a smart device.

In a possible implementation, the receiving unit is further configured to receive device information sent by a second electronic device. The device information includes identifiers of P smart devices and a tag corresponding to each of the P smart devices, and P is an integer greater than 0. The processing unit is further configured to create, based on the tag corresponding to each smart device, a smart device group corresponding to the tag. A smart device in the P smart devices is included in a smart device group corresponding to a tag of the smart device.

In a possible implementation, the receiving unit is further configured to receive a device adding instruction. The device adding instruction indicates to add a target smart device and indicates a tag of the target smart device. The processing unit is further configured to: in response to the device adding instruction, add the target smart device to the smart device control apparatus. The processing unit is further configured to: if a smart device group corresponding to the tag of the target smart device exists, add the target smart device to the smart device group corresponding to the tag of the target smart device. The processing unit is further configured to: if a smart device group corresponding to the tag of the target smart device does not exist, create the smart device group corresponding to the tag of the target smart device. The target smart device is included in the smart device group corresponding to the tag of the target smart device.

In a possible implementation, the receiving unit is further configured to receive group information sent by a second electronic device. The group information includes identifiers of Q smart device groups created by the second electronic device based on a tag of a smart device and an identifier of a smart device included in each of the Q smart device groups, and Q is a positive integer. The processing unit is further configured to create the Q smart device groups based on the group information.

In a possible implementation, the tag includes one or more of the following: a room in which the smart device is mounted, a mounting position of the smart device, an illumination area of the smart device, a type of the smart device, or a function of the smart device.

In a possible implementation, the processing unit is further configured to: in response to the batch-control instruction, determine whether a first group exists in the created smart device groups. The first group includes the N smart devices and does not include a device other than the N smart devices. The processing unit is further configured to: if the first group does not exist in the created smart device groups, create the first group. The sending unit is further configured to: if the first group exists in the created smart device groups, deliver a group-control instruction to the first group, so that the first group performs the target operation. A specific implementation in which the processing unit selects, based on the identifiers of the N smart devices, M smart device groups from created smart device groups is: if the first group does not exist in the created smart device groups, selecting, based on the identifiers of the N smart devices, the M smart device groups from the created smart device groups.

In a possible implementation, a specific implementation in which the processing unit creates the first group is: if a quantity of the created smart device groups does not meet a threshold condition, creating the first group.

In a possible implementation, the processing unit is further configured to: if the quantity of the created smart device groups meets the threshold condition, create the first group after a created second group is deleted. The second group is one of the created smart device groups.

In a possible implementation, the second group is a smart device group that is in the created smart device groups and that executes the group-control instruction for a smallest quantity of times.

Optionally, if a plurality of smart device groups in the created smart device groups execute the group-control instruction for a smallest quantity of times, the second group is a smart device group that is in the plurality of smart device groups and that is created earliest.

In a possible implementation, the second group is a smart device group that is in the created smart device groups and that executes the group-control instruction for a smallest quantity of times within a recent preset time period.

Optionally, if a plurality of smart device groups in the created smart device groups execute the group-control instruction for the smallest quantity of times within a recent preset time period, the second group is a smart device group that is in the plurality of smart device groups and that is created earliest.

According to a fourth aspect, this application provides a smart device control apparatus. The apparatus includes:
a receiving unit, configured to receive a batch-control instruction, where the batch-control instruction is used to control N smart devices to perform a target operation, the batch-control instruction carries identifiers of the N smart devices, and N is an integer greater than 1; a processing unit, configured to: in response to the batch-control instruction, determine whether a first group exists in the created smart device groups, where the first group includes the N smart devices and does not include a device other than the N smart devices, and the processing unit is further configured to: if the first group does not exist in the created smart device groups, create the first group; and a sending unit, configured to: if the first group exists in the created smart device groups, deliver a group-control instruction to the first group, so that the first group performs the target operation.

In a possible implementation, a specific implementation in which the processing unit creates the first group is: if a quantity of the created smart device groups does not meet a threshold condition, creating the first group.

In a possible implementation, the processing unit is further configured to: if the quantity of the created smart device groups meets the threshold condition, the smart device control apparatus may create the first group after a created second group is deleted. The second group is one of the created smart device groups.

In a possible implementation, the second group is a smart device group that is in the created smart device groups and that executes the group-control instruction for a smallest quantity of times.

In a possible implementation, if a plurality of smart device groups in the created smart device groups execute the group-control instruction for a smallest quantity of times, the second group is a smart device group that is in the plurality of smart device groups and that is created earliest.

In a possible implementation, the second group is a smart device group that is in the created smart device groups and that executes the group-control instruction for a smallest quantity of times within a recent preset time period.

Optionally, if a plurality of smart device groups in the created smart device groups execute the group-control instruction for the smallest quantity of times within a recent preset time period, the second group is a smart device group that is in the plurality of smart device groups and that is created earliest.

In a possible implementation, the sending unit is further configured to: if the first group does not exist in the created smart device groups, send a single-control instruction to the N smart devices, so that the N smart devices separately perform the target operation.

For beneficial effects of the apparatuses described in the third aspect and the fourth aspect, refer to the beneficial effects of the methods according to the first aspect and the second aspect. Details are not described herein again.

According to a fifth aspect, this application provides an electronic device, including a processor and a memory. The memory is configured to store a computer program. The processor invokes the computer program to perform the method according to any one of the foregoing aspects.

According to a sixth aspect, an embodiment of this application provides a computer storage medium, including computer instructions. When the computer instructions are run on an electronic device, the electronic device is enabled to perform the method according to any one of the foregoing aspects.

According to a seventh aspect, an embodiment of this application provides a computer program product. When the computer program product runs on a computer, the computer is enabled to perform the method according to any one of the foregoing aspects.

### BRIEF DESCRIPTION OF DRAWINGS

FIG. 1A to FIG. 1D are diagrams of creating a smart device group by a user in a conventional technology;
FIG. 2A and FIG. 2B are diagrams of controlling smart devices in batches in a conventional technology;
FIG. 3 is a diagram of a communication system according to an embodiment of this application;
FIG. 4 is a diagram of a structure of a gateway 400 according to an embodiment of this application;
FIG. 5 is a schematic flowchart of a smart device control method according to an embodiment of this application;
FIG. 6A to FIG. 6D are diagrams of a scenario according to an embodiment of this application;
FIG. 7A and FIG. 7B are diagrams of batch control according to an embodiment of this application;
FIG. 8A to FIG. 8D are diagrams of adding a new device and adding a tag according to an embodiment of this application;
FIG. 9 is a schematic flowchart of another smart device control method according to an embodiment of this application;
FIG. 10 is a diagram of batch control according to this application;
FIG. 11 is a schematic flowchart of still another smart device control method according to an embodiment of this application;
FIG. 12 is a schematic flowchart of still another smart device control method according to an embodiment of this application;
FIG. 13 is a schematic flowchart of still another smart device control method according to an embodiment of this application; and
FIG. 14 is a schematic flowchart of still another smart device control method according to an embodiment of this application.

### DESCRIPTION OF EMBODIMENTS

The technical solutions according to embodiments of this application are clearly and completely described in the following with reference to the accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

In the following descriptions, the terms "first" and "second" are merely intended for a purpose of description, and shall not be interpreted as indicating or implying relative importance or implying a quantity of indicated technical features. Therefore, a feature limited by "first" and "second" may explicitly or implicitly include one or more features. In the descriptions of embodiments of this application, unless otherwise specified, "a plurality of" means two or more.

To flexibly control smart devices in batches, embodiments of this application provide a smart device control method and an electronic device. Embodiments of this application mainly relate to a first electronic device, a second electronic device, a cloud server, a smart device, and a terminal device. The first electronic device may be a gateway (gateway) or another electronic device, and the second electronic device may be a home hub device or another electronic device. The following describes the smart device control method and the electronic device that are provided in embodiments of this application by using an example in which the first electronic device is a gateway and the second electronic device is a home hub device.

To better understand embodiments of this application, the following first describes a communication system in embodiments of this application.

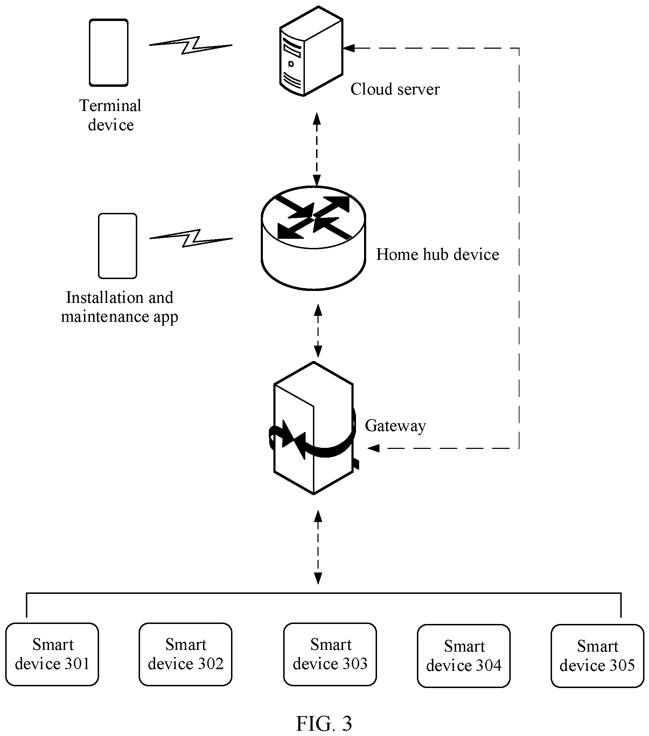

FIG. 3 is a diagram of a communication system according to an embodiment of this application. As shown in FIG. 3, the communication system includes a terminal device, a cloud server, a gateway, and a smart device. Optionally, the communication system further includes a home hub device. In FIG. 3, an example in which five smart devices are included is used. There may be more than or fewer than five smart devices in the communication system.

### 1. Terminal device

The terminal device is a device having a wireless transceiver function and may be deployed on land, including indoor, outdoor, handheld, wearable, or vehicle-mounted deployment. For example, the terminal device may be a mobile phone (mobile phone), a tablet computer (Pad), a computer having the wireless transceiver function, a virtual reality (VR) terminal device, an augmented reality (AR) terminal device, a wireless terminal in industrial control (industrial control), a vehicle-mounted terminal device, a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or a wearable terminal device.

A user-oriented smart control app may be installed on the terminal device. A user may add a smart device to the gateway by operating the smart control app. The user may also use the smart control app to view a status of the smart device. The user may also use the smart control app to control the smart device. In embodiments of this application, the smart control app may alternatively be referred to as another name. This is not limited in embodiments of this application.

### 2. Cloud server

The cloud server in embodiments of this application is a server corresponding to the smart control app. The cloud server may generate a batch-control instruction used to control, in batches, a plurality of smart devices to perform a target operation. For example, the cloud server may generate the batch-control instruction when determining that a trigger condition of a scenario created by the cloud server for the user is met. The scenario may include the trigger condition, a smart device that needs to perform an operation, the operation that needs to be performed, and the like.

### 3. Home hub device

A home hub may be a software component that may be deployed on a device like a router, a computer, a television, or a gateway. The device on which the home hub is deployed may be referred to as a home hub device. The home hub device may be a home connection center, a center of a preset scenario, a control center, a data center, a server of an installation and maintenance app oriented to operation, maintenance, and installation personnel, or the like.

That the home hub device is a home connection center includes but is not limited to: The gateway is connected to the home hub device, and the smart device is connected to the home hub device via the gateway.

That the home hub device is a center of a preset scenario includes but is not limited to: The operation, maintenance, and installation personnel may preset a scenario for controlling the smart device on the home hub device by using an installation and maintenance app. For example, the scenario includes a trigger condition, a smart device that needs to perform an operation, and the operation that needs to be performed.

That the home hub device is a control center includes but is not limited to: The home hub device may generate a batch-control instruction used to control a plurality of smart devices to perform a target operation. For example, the home hub device may generate, based on a scenario, the batch-control instruction used to control the plurality of smart devices to perform the target operation.

That the home hub device is a data center includes but is not limited to: The home hub device may record status data of the smart device, usage data of the smart device, and the like, to facilitate subsequent data analysis.

The installation and maintenance app oriented to the operation, maintenance, and installation personnel: For example, if a user customizes an all-in-one smart home, the operation, maintenance, and installation personnel may use the installation and maintenance app to add a customized smart device to the gateway and set related parameters of the smart device, such as tags like a room in which the smart device is mounted, a position in the room, a type of the smart device, or a function of the smart device. The installation and maintenance app is usually operated by the operation, maintenance, and installation personnel. The installation and maintenance app may alternatively have another name. This is not limited in embodiments of this application.

In a possible implementation, the home hub may include a plurality of software modules, for example, include a hub module and a subsystem. The hub module is connected to the cloud server, the installation and maintenance app, and the gateway. The hub module is connected to the subsystem. The hub module is used for information or signaling interaction with the cloud server, the installation and maintenance app, the gateway, and the subsystem. The subsystem is used for aggregating device capabilities, and opening subsystem capabilities abstracted from devices to the external. For example, a lighting subsystem has the following capabilities open to the external: "reading light", "reception light", "movie-watching light", and the like. After receiving an execution instruction of "reading light", the hub module sends the execution instruction to the subsystem. After receiving the execution instruction of "reading light", the subsystem calculates lighting devices and lighting parameters for the "reading light", generates a corresponding batch control command, sends the batch control command to the hub module, and delivers the batch control command to the gateway via the hub module. For another example, the operation, maintenance, and installation personnel may use the installation and maintenance app to import a tag of the smart device to the hub module. The hub module notifies the subsystem of the tag of the smart device. The subsystem determines a smart device group through calculation based on the tag of the smart device, and invokes an interface of the hub module to create the smart device group.

Optionally, the hub module and the subsystem may be deployed on a same device, or may be deployed on different devices. This is not limited in embodiments of this application.

### 4. Gateway

The gateway is also referred to as an inter-network connector or a protocol converter. The gateway may implement network interconnection above a network layer, and is a complex network interconnection device, for example, may be used for interconnection between two networks with different upper-layer protocols. The gateway may be used for wide area network interconnection and local area network interconnection. The gateway may be used between two systems with different communication protocols, data formats, languages, or even completely different architectures. The gateway is a translator.

In a possible implementation, the gateway in embodiments of this application may be a Bluetooth gateway (bluetooth gateway). If the gateway in embodiments of this application is a Bluetooth gateway, the smart device in embodiments of this application may be a Bluetooth device having a Bluetooth communication function.

Because the Bluetooth device does not have a capability of directly accessing a network, the Bluetooth device needs to access the network via the Bluetooth gateway that has both a Bluetooth communication processing module and a wireless local area network (wireless local area network, WLAN) communication processing module. The Bluetooth device accesses the network via the Bluetooth gateway. The Bluetooth gateway may control the Bluetooth device. For example, the cloud server may deliver a control instruction to the Bluetooth gateway. After receiving the control instruction via the WLAN communication processing module, the Bluetooth gateway sends the control instruction to the Bluetooth device via the Bluetooth communication processing module. The Bluetooth device performs a target operation based on the control instruction. For another example, the Bluetooth device may send status data of the Bluetooth device to the Bluetooth gateway through Bluetooth communication. After receiving the status data of the Bluetooth device via the Bluetooth communication processing module, the Bluetooth gateway reports the status data to the cloud server via the WLAN communication processing module. The cloud server sends the status data to the terminal device. The terminal device may display a status of the Bluetooth device to the user.

Optionally, the Bluetooth gateway in embodiments of this application may be specifically a Bluetooth low energy mesh (bluetooth low energy mesh, BLE mesh) gateway. The Bluetooth low energy mesh gateway is a gateway located in a Bluetooth low energy mesh network. The BLE mesh network is a network topology used to establish many-to-many device communication. In the BLE mesh network, data may be sent from any Bluetooth device to the entire network. In addition, when a Bluetooth device in the network is faulty, the entire network can still maintain normal communication. This has advantages such as convenient networking and a strong anti-interference capability. Currently, the BLE mesh network is widely used in Internet of Things scenarios such as a smart home. A smart home device using a BLE mesh solution may automatically and quickly perform Bluetooth pairing and establish a network connection. This accelerates deployment of a smart home ecosystem.

In another possible implementation, the gateway may be a ZigBee gateway. If the gateway in embodiments of this application is a ZigBee gateway, the smart device embodiments of this application may be a ZigBee device having a ZigBee communication function.

ZigBee is a technology similar to Bluetooth and a low-cost and low-power-consumption short-range wireless networking communication technology. ZigBee is widely used in fields such as a smart home, a smart building, and industrial surveillance. Because the ZigBee device does not have a capability of directly accessing a network, the ZigBee device needs to access the network via the ZigBee gateway that has both a ZigBee communication processing module and a WLAN communication processing module. A principle of a manner in which the ZigBee device accesses the network via the ZigBee gateway is the same as that of the foregoing manner in which the Bluetooth device accesses the network via the Bluetooth gateway. For the manner in which the ZigBee device accesses the network via the ZigBee gateway, refer to the foregoing manner in which the Bluetooth device accesses the network via the Bluetooth gateway. Details are not described herein.

In embodiments of this application, the gateway may receive the batch-control instruction that is generated by the cloud server or the home hub device and that is used to control the plurality of smart devices to perform the target operation, and control, based on the batch-control instruction, the plurality of smart devices to perform the target operation. If there is a home hub device, the batch-control instruction generated by the cloud server may be sent to the gateway via the home hub device. If there is no home hub device, the batch-control instruction generated by the cloud server may be directly sent to the gateway.

### 5. Smart device

The smart device may be a device having a Bluetooth communication function or a ZigBee communication function in an Internet of Things, for example, may be a smart home device having the Bluetooth communication function or the ZigBee communication function, for example, a lamp, a switch, a speaker, a fan, an air conditioner, a refrigerator, washing machine, a television, a computer, a robotic vacuum cleaner, a tap, a smart lock, or a sensor. Optionally, the smart device may alternatively be a controllable device based on another communication protocol.

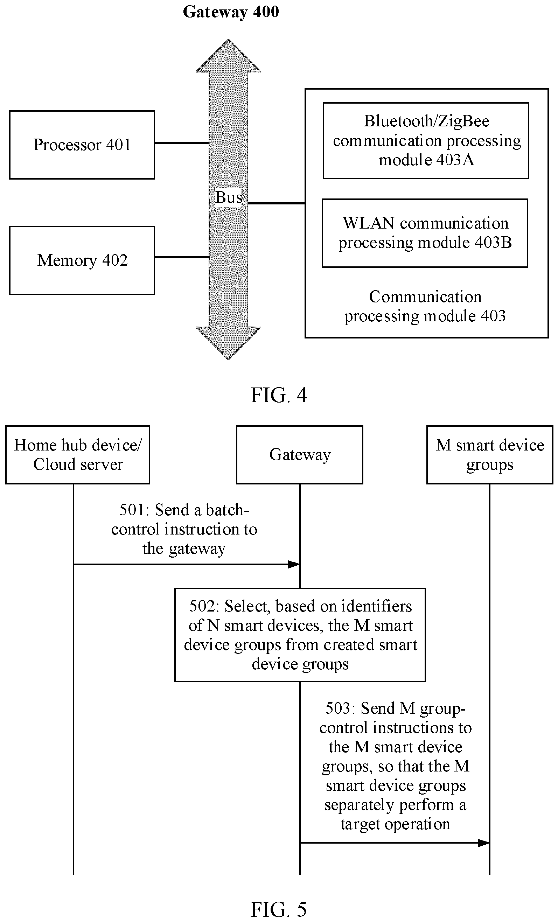

FIG. 4 shows an example of a diagram of a structure of a gateway 400 according to this application.

As shown in FIG. 4, the gateway 400 may include a processor 401, a memory 402, and a communication processing module 403. These components may be connected through a bus.

The processor 401 may be configured to read and execute computer-readable instructions. During specific implementation, the processor 401 may mainly include a controller, an arithmetic unit, and a register. The controller is mainly responsible for instruction decoding, and sends a control signal for an operation corresponding to the instruction. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution.

The memory 402 is coupled to the processor 401, and is configured to store various software programs and/or a plurality of groups of instructions. In a specific implementation, the memory 402 may include a high-speed random-access memory, and may further include a non-volatile memory, for example, one or more magnetic disk storage devices, a flash device, or another non-volatile solid-state storage device. The memory 402 may store an operating system, for example, an embedded operating system like uCOS, VxWorks, or RTLinux. The memory 402 may further store a communication program, and the communication program may be used by the gateway 400 to communicate with another device (for example, a cloud server, a home hub device, or a smart device).

The processor 401 may invoke a software program and/or instructions in the memory 402 to perform a data processing operation of the gateway in the following method embodiments. For example, the processor 401 may parse a batch-control instruction used to control N smart devices to perform a target operation, select smart device groups based on a parsing result, and generate a group-control instruction used to control the plurality of smart device groups to perform the target operation. Optionally, a single-control instruction used to separately control a smart device to perform the target operation may be further generated. For another example, the processor 401 may parse a batch-control instruction used to control N smart devices in batches to perform a target operation; determine, based on a parsing result, whether a first group exists in created smart device groups, where the first group is a smart device group that includes only the N smart devices; and when determining that the first group does not exist in the created smart device groups, create the first group; or when determining that the first group exists in the created smart device groups, generate a group-control instruction used to control the first group to perform the target operation.

The communication processing module 403 may include a Bluetooth or ZigBee communication processing module 403A and a WLAN communication processing module 403B. Alternatively, the Bluetooth or ZigBee communication processing module 403A may be replaced with another communication module. This is not limited in embodiments of this application.

The communication processing module 403 may perform data receiving and sending operations of the gateway in the following method embodiments. For example, the WLAN communication processing module 403B may listen to a signal transmitted by another device (for example, a home hub device or a cloud server), for example, a batch-control instruction. For example, the Bluetooth or ZigBee communication processing module 403Amay transmit a signal to another device (for example, a smart device), for example, a group-control instruction used to control a plurality of smart device groups to perform a target operation, or a single-control instruction used to control a smart device to perform a target operation.

In a possible implementation, the communication processing module 403 may further include a wired communication module (not shown). The gateway may communicate with the home hub device via the wired communication module.

In a possible implementation, the communication processing module 403 may further include a cellular mobile communication processing module (not shown). The cellular mobile communication processing module may communicate with another device (for example, a home hub device or a cloud server) by using a cellular mobile communication technology.

In some other embodiments of this application, the gateway 400 may include more or fewer components than those shown in the figure, or combine some components, or split some components, or have different component arrangements. The components shown in the figure may be implemented by hardware, software, or a combination of software and hardware.

The home hub device includes a processor, a memory, and a communication processing module, and these components may be connected through a bus. For a structure of the home hub device, refer to the structure of the gateway 400. The processor may invoke a software program and/or instructions in the memory to perform a data processing operation of the home hub device in the following method embodiments. For example, the processor may generate a batch-control instruction. For another example, the processor may create a smart device group based on a tag of a smart device. The communication processing module may perform data receiving and sending operations of the home hub device in the following method embodiments. For example, the communication processing module may send the batch-control instruction to the gateway. For other descriptions of the processor, the memory, and the communication processing module, refer to the foregoing descriptions of the processor, the memory, and the communication processing module of the gateway. Details are not described herein again.

The following further describes the smart device control method provided in embodiments of this application.

FIG. 5 is a schematic flowchart of a smart device control method according to an embodiment of this application.

501: A home hub device or a cloud server sends a batch-control instruction to a gateway. Correspondingly, the gateway may receive the batch-control instruction. The batch-control instruction is used to control N smart devices to perform a target operation. N is an integer greater than 1. The batch-control instruction carries identifiers of the N smart devices.

In a possible implementation, the batch-control instruction may be generated by the cloud server. If a communication system has a home hub device, the cloud server sends the batch-control instruction to the home hub device, and then the home hub device sends the batch-control instruction to the gateway. If a communication system does not have a home hub device, the cloud server directly sends the batch-control instruction to the gateway.

Optionally, the cloud server may generate the batch-control instruction when determining that a trigger condition of a scenario of a user is met. The scenario may be a scenario set by the user on a terminal device by using a smart control app. The scenario includes the trigger condition, a smart device that needs to perform an operation, and the operation that needs to be performed. For example, the trigger condition of the scenario may be that the user taps a scenario card, a specified time is reached, it is detected that a smart lock is unlocked, or the like.

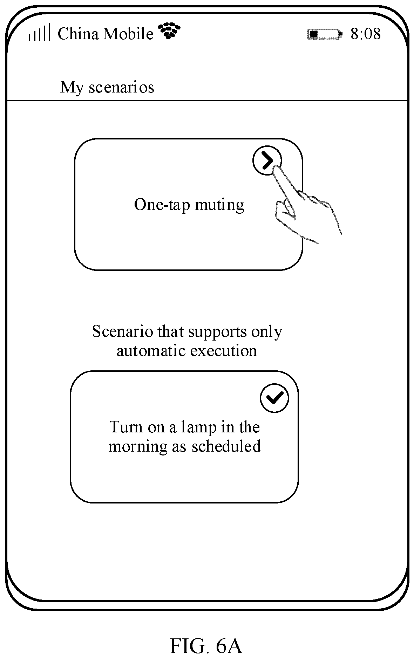

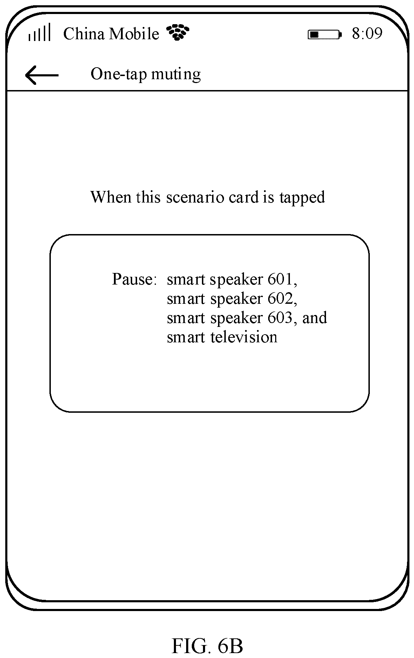

For example, FIG. 6A is a diagram of scenario cards in a scenario 1 and a scenario 2. As shown in FIG. 6A, a name of the scenario 1 is one-tap muting, and a name of the scenario 2 is turning on a lamp in the morning as scheduled. As shown in FIG. 6A, it is assumed that a user taps a scenario unfold button of the scenario 1. In this case, the terminal device may display content of the scenario 1. FIG. 6B shows the content of the scenario 1. As shown in FIG. 6B, a trigger condition of the scenario 1 is that the scenario card is tapped. Smart devices in the scenario 1 include a smart speaker 601 to a smart speaker 603, and a smart television. An operation that needs to be performed in the scenario 1 is pausing playing. Therefore, when the user taps the scenario card of the scenario 1, the cloud server is triggered to generate a batch-control instruction. The batch-control instruction is used to control the smart speaker 601 to the smart speaker 603 and the smart television to pause playing.

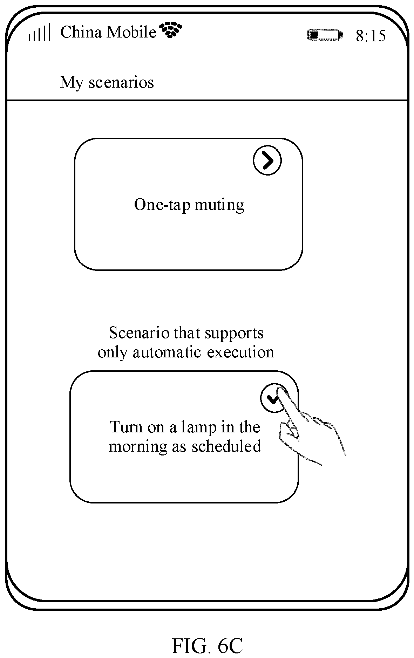

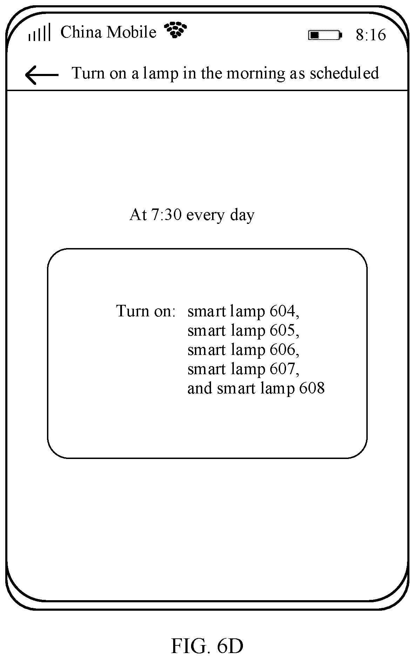

As shown in FIG. 6C, it is assumed that the user taps a scenario unfold button of the scenario 2. In this case, the terminal device may display content of the scenario 2. FIG. 6D shows the content of the scenario 2. As shown in FIG. 6D, a trigger condition of the scenario 2 is 7:30 every day. Smart devices in the scenario 2 include a smart lamp 604 to a smart lamp 608, and an operation that needs to be performed in the scenario 2 is turning on. After the user enables the scenario 2, the cloud server generates a batch-control instruction at 7:30 every day. The batch-control instruction is used to control the smart lamp 604 to the smart lamp 608 to be turned on.

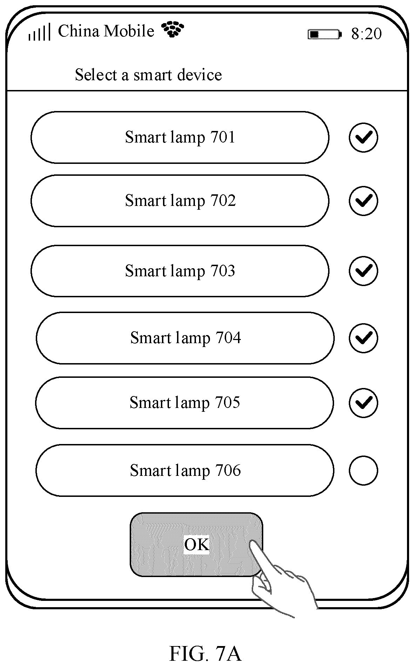

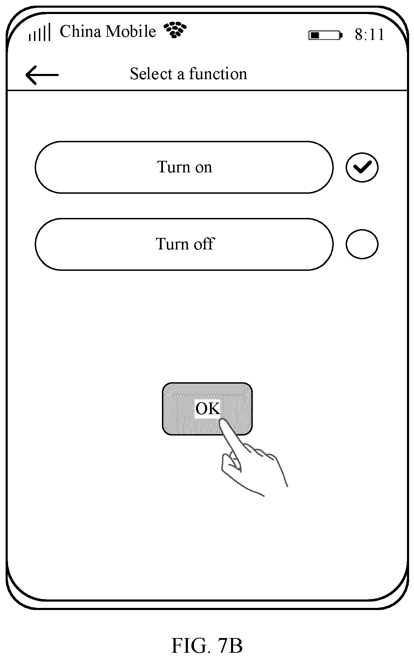

Certainly, the cloud server may be triggered in another manner to generate the batch-control instruction. This is not limited in embodiments of this application. For example, as shown in FIG. 7A, the user may directly select, in the smart control app, a smart lamp 701 to a smart lamp 705 that need to be controlled, and then tap an "OK" button. As shown in FIG. 7B, after tapping the "OK" button, the user may select a turn-on function, and tap an "OK" button. Then, the smart control app indicates the cloud server to generate the batch-control instruction used to control the smart lamp 701 to the smart lamp 705 to be turned on.

In another possible implementation, the batch-control instruction may be generated by the home hub device. Optionally, the home hub device may generate the batch-control instruction when determining that a trigger condition of a scenario of the user is met. The scenario may be preset by operation, maintenance, and installation personnel for the user by using an installation and maintenance app. The scenario includes the trigger condition, a smart device that needs to perform an operation, and the operation that needs to be performed. For example, the trigger condition of the scenario may be that a specified time is reached, it is detected that a smart lock is unlocked, or the like. Certainly, the home hub device may be triggered in another manner to generate the batch-control instruction. This is not limited in embodiments of this application.

502: The gateway selects, based on the identifiers of the N smart devices, M smart device groups from the created smart device groups.

503: The gateway sends M group-control instructions to the M smart device groups, so that the M smart device groups separately perform the target operation.

Each of the M smart device groups includes one or more smart devices. The one or more smart devices included in each smart device group are a subset of the N smart devices. M is an integer greater than 0.

For example, the N smart devices include {smart device 1, smart device 2, smart device 3, smart device 4, smart device 5}. The gateway includes a smart device group 1 to a smart device group 3. The smart device group 1 includes {smart device 1, smart device 2}. The smart device group 2 includes {smart device 3, smart device 4, smart device 5}. The smart device group 3 includes {smart device 4, smart device 5, smart device 6}. The M smart device groups selected by the gateway based on the identifiers of the N smart devices may be the smart device group 1 and the smart device group 2. The gateway sends a group-control instruction to the smart device group 1, and sends a group-control instruction to the smart device group 2, so that the smart device 1 and the smart device 2 in the smart device group 1 perform the target operation and the smart device 3 to the smart device 5 in the smart device group 2 perform the target operation.

Optionally, smart devices included in different smart device groups in the M smart device groups may overlap or do not overlap. For example, the N smart devices include {smart device 1, smart device 2, smart device 3, smart device 4, smart device 5}. The gateway includes a smart device group 1 to a smart device group 3. The smart device group 1 includes {smart device 1, smart device 2, smart device 3}. The smart device group 2 includes {smart device 3, smart device 4, smart device 5}. The smart device group 3 includes {smart device 4, smart device 5, smart device 6}. The M smart device groups selected by the gateway based on the identifiers of the N smart devices may be the smart device group 1 and the smart device group 2.

In this embodiment of this application, one or more smart device groups are created on the gateway. Smart devices included in different smart device groups may overlap or not overlap. For example, the gateway includes a smart device group 1 to a smart device group 3. The smart device group 1 includes a lamp 1 to a lamp 3, the smart device group 2 includes the lamp 3 to a lamp 6, and the smart device group 3 includes a lamp 7 to a lamp 10.

In a possible implementation, the one or more smart device groups created on the gateway may include a smart device group manually created by the user on the gateway by using the smart control app, and/or a smart device group automatically created by the gateway.

In a possible implementation, the smart device groups created on the gateway include a smart device group created based on a tag of a smart device. In other words, the smart device group may be automatically created based on the tag of the smart device, and the user does not need to manually create the smart device group. This improves user experience.

Optionally, the tag of the smart device includes one or more of the following: a room in which the smart device is mounted, a mounting position of the smart device, an illumination area of the smart device, a type of the smart device, or a function of the smart device.

For example, the room in which the smart device is mounted may be a living room, a dining room, a bedroom, a kitchen, a bathroom, a study, a balcony, or the like. The mounting position of the smart device is a specific position of the smart device in a room, for example, may be the top of a bedroom or a wall of a bedroom. The illumination area of the smart device may be, for example, a wall, a table, a ceiling, or a ground. The type of the smart device may be, for example, a ceiling lamp, an ambient lamp, an atmosphere lamp, an air conditioner, a television, a speaker, or a fan. The function of the smart device may be, for example, basic lighting, auxiliary lighting, accent lighting, atmosphere lighting, or decorative lighting.

The following describes two possible implementations in which the gateway automatically creates the smart device group based on the tag of the smart device.

Implementation 1: The home hub device sends device information to the gateway. The device information includes identifiers of P smart devices and a tag corresponding to each of the P smart devices. P is an integer greater than 1. Correspondingly, the gateway may receive the device information, and create, based on the tag corresponding to each smart device, a smart device group corresponding to the tag. A smart device in the P smart devices is included in a smart device group corresponding to a tag of the smart device.

For example, it is assumed that a user customizes an all-in-one smart home. In this case, operation, maintenance, and installation personnel may set, on a home hub device by using an installation and maintenance app, one or more smart devices that need to be added, and set tags of the one or more smart devices. It is assumed that the smart devices that need to be added include a ceiling lamp 801, a ceiling lamp 802, and an ambient lamp 803 to an ambient lamp 806. The ceiling lamp 801, the ambient lamp 803, and the ambient lamp 802 are mounted in a living room. The ceiling lamp 802, the ambient lamp 805, and the ambient lamp 806 are mounted in a bedroom. It is assumed that grouping is performed based on a type of a smart device and a room in which the smart device is mounted. The home hub device sends the identifier of the smart device to be added and the tag of the smart device to be added to the gateway. As shown in the following Table 1, the gateway may create a smart device group 1 to a smart device group 4. A tag corresponding to the smart device group 1 is a ceiling lamp, and the smart device group 1 includes the ceiling lamp 801 and the ceiling lamp 802. A tag corresponding to the smart device group 2 is an ambient lamp, and the smart device group 2 includes the ambient lamp 803 to the ambient lamp 806. A tag corresponding to the smart device group 3 is a living room, and the smart device group 3 includes the ceiling lamp 801, the ambient lamp 803, and the ambient lamp 804. A tag corresponding to the smart device group 4 is a bedroom, and the smart device group 4 includes the ceiling lamp 802, the ambient lamp 805, and the ambient lamp 806.

**Table 1**

| Smart device group | Devices included in the smart device group |
|---|---|
| Smart device group 1 (the corresponding tag is the ceiling lamp) | Ceiling lamp 801 and ceiling lamp 802 |
| Smart device group 2 (the corresponding tag is the ambient lamp) | Ambient lamp 803 to ambient lamp 806 |
| Smart device group 3 (the corresponding tag is the living room) | Ceiling lamp 801, ambient lamp 803, and ambient lamp 804 |
| Smart device group 4 (the corresponding tag is the bedroom) | Ceiling lamp 802, ambient lamp 805, and ambient lamp 806 |

Implementation 2: The terminal device may send a device adding instruction to the gateway. The device adding instruction indicates to add a target smart device, and indicate a tag of the target smart device. Correspondingly, the gateway may receive the device adding instruction. After receiving the device adding instruction, the gateway adds the target smart device to the gateway in response to the device adding instruction. If a smart device group corresponding to the tag of the target smart device exists, the gateway adds the target smart device to the smart device group corresponding to the tag of the target smart device. If a smart device group corresponding to the tag of the target smart device does not exist, the gateway creates the smart device group corresponding to the tag of the target smart device. The target smart device is included in the smart device group corresponding to the tag of the target smart device.

In other words, the user may preset a tag for a new smart device when the smart device is added. Each time a smart device is added to the gateway, the smart device is added to a corresponding smart device group based on a tag of the smart device.

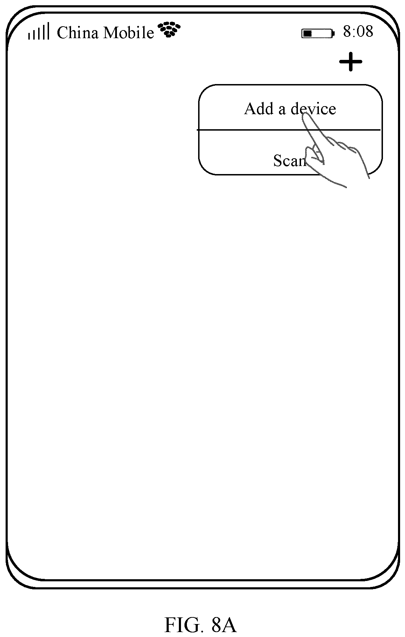

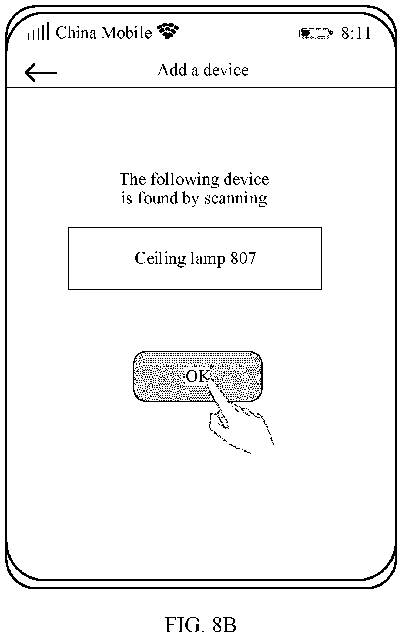

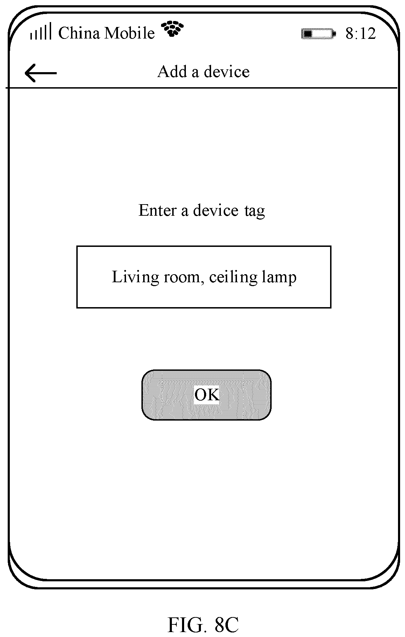

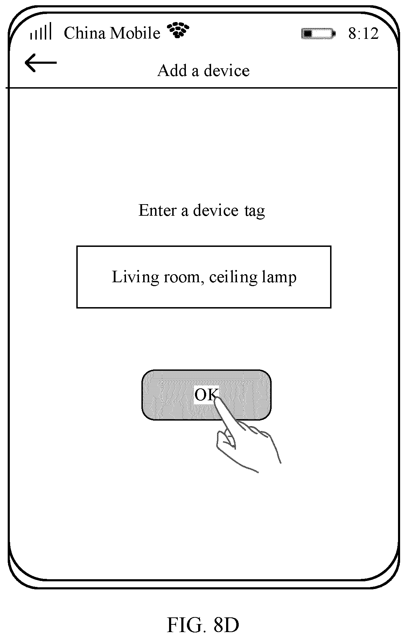

For example, it is assumed that a user purchases a new smart device, and the new smart device needs to be added to the gateway. It is assumed that the new smart device is a ceiling lamp 807. As shown in FIG. 8A, the user may tap an "Add a new device" button in a user-oriented smart control app. Then, the terminal device indicates, via the cloud server, the gateway to scan for the new smart device. After finding the ceiling lamp 807 by scanning, the gateway notifies the cloud server of the ceiling lamp 807. The cloud server notifies the terminal device that the ceiling lamp 807 is found by scanning. As shown in FIG. 8B, the terminal device displays the ceiling lamp 807 found by scanning by the gateway. After selecting the ceiling lamp 807 on the terminal device, the user taps an "OK" button. As shown in FIG. 8C, after the user taps the "OK" button, the terminal device displays a tag input box. The user may select a tag from a tag drop-down list box or enter a tag. As shown in FIG. 8D, after entering the tag, the user taps an "OK" button. After the user taps the "OK" button, the terminal device may send a device adding instruction to the gateway via the cloud server. The device adding instruction indicates to add the ceiling lamp 807, and indicates that a tag of the ceiling lamp 807 includes the living room and the ceiling lamp. Correspondingly, the gateway may receive the device adding instruction. After receiving the device adding instruction, the gateway adds the ceiling lamp 807 to the gateway. It is assumed that smart device groups included on the gateway are shown in the foregoing Table 1. In this case, the gateway adds the ceiling lamp 807 to the smart device group 1 and the smart device group 3. It is assumed that the gateway has only the smart device group 2 and the smart device group 4 in Table 1. In this case, the gateway may create a smart device group 1 corresponding to the tag of the ceiling lamp and a smart device group 3 corresponding to the tag of the living room, and add the ceiling lamp 807 to the smart device group 1 and the smart device group 3.

In a possible implementation, the home hub device may alternatively create a smart device group based on a tag of a smart device. For example, it is assumed that a user customizes an all-in-one smart home. In this case, operation, maintenance, and installation personnel may set, on a home hub device by using an installation and maintenance app, one or more smart devices that need to be added, and set tags of the one or more smart devices. The home hub device may create the smart device group based on the tags of the one or more smart devices. For a specific implementation in which the home hub device creates the smart device group based on the tag of the smart device, refer to the description of Implementation 1 in which the gateway creates the smart device group based on the tag of the smart device. Details are not described herein again.

In a possible implementation, after creating Q smart device groups based on the tags of the smart devices, the home hub device may send group information to the gateway. The group information includes identifiers of the Q smart device groups and an identifier of a smart device included in each of the Q smart device groups. Q is a positive integer. Correspondingly, the gateway may receive the group information sent by the home hub device, and create the Q smart device groups based on the group information. Based on this possible implementation, the gateway can automatically create the smart device group. This is more intelligent.

It can be learned that, according to the method described in FIG. 5, when the gateway receives the batch-control instruction used to control the N smart devices to perform the target operation, even if a smart device group including only the N smart devices is not created in advance on the gateway, the gateway can flexibly control the N smart devices in batches.

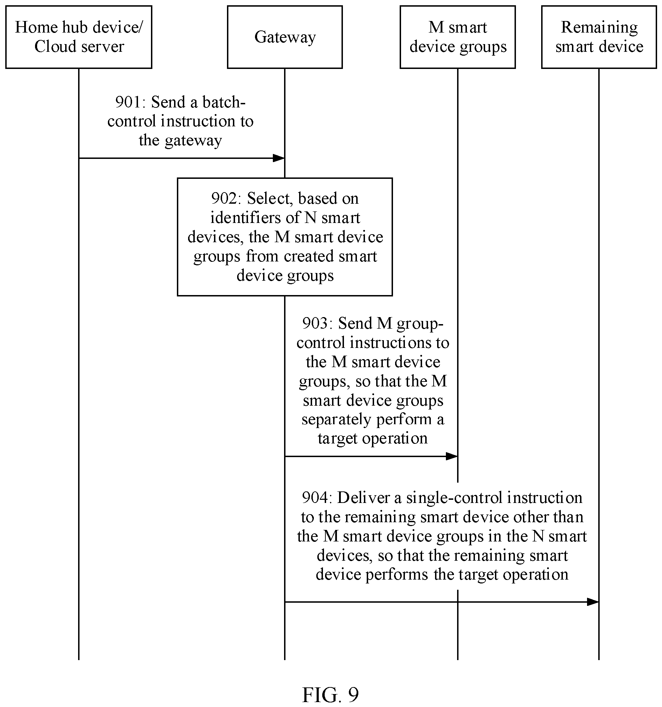

FIG. 9 is a schematic flowchart of another smart device control method according to an embodiment of this application. In the method described in FIG. 9, a gateway preferentially performs group control, and then performs single control. This helps avoid a chasing effect.

901: A home hub device or a cloud server sends a batch-control instruction to the gateway. Correspondingly, the gateway may receive the batch-control instruction. The batch-control instruction is used to control N smart devices to perform a target operation. N is an integer greater than 1. The batch-control instruction carries identifiers of the N smart devices.

902: The gateway selects, based on the identifiers of the N smart devices, M smart device groups from created smart device groups.

903: The gateway sends M group-control instructions to the M smart device groups, so that the M smart device groups separately perform the target operation.

For specific implementations of step 901 to step 903, refer to the specific implementations of step 501 to step 503 in the foregoing. Details are not described herein again.

904: The gateway delivers a single-control instruction to a remaining smart device other than the M smart device groups in the N smart devices, so that the remaining smart device performs the target operation. The remaining smart device does not belong to any created smart device group, or a smart device included in a created smart device group to which the remaining smart device belongs does not belong to a subset of the N smart devices.

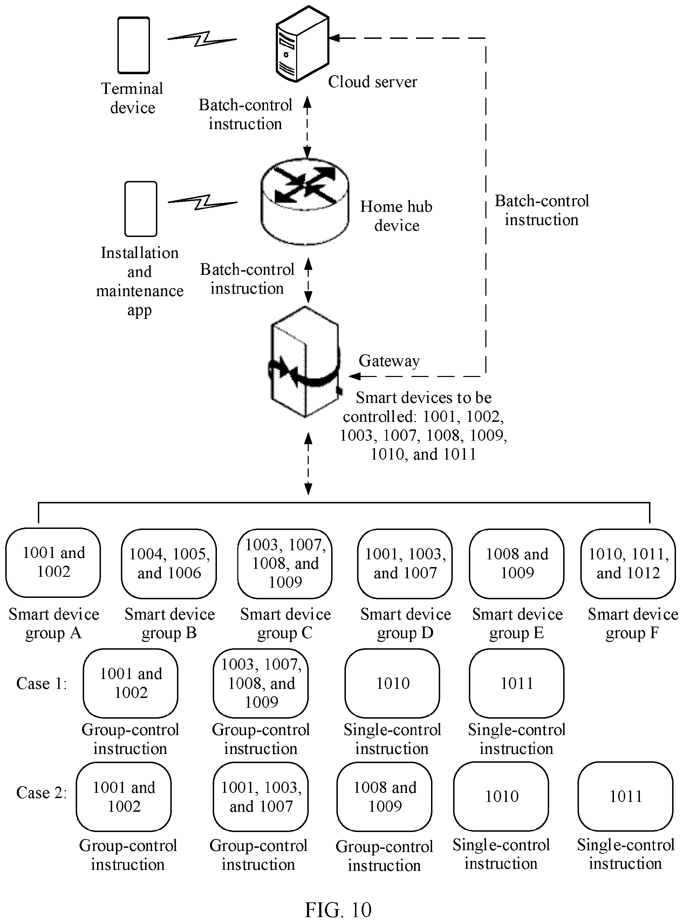

For example, it is assumed that a trigger condition of a scenario X is that 7:00 a.m. is reached. Smart devices that need to be controlled in the scenario X include {smart device 1001, smart device 1002, smart device 1003, smart device 1007 to smart device 1011}. In the scenario X, an operation that a smart device needs to be controlled to perform is a start operation. It is assumed that smart device groups created on a gateway are shown in FIG. 10. To be specific, the gateway includes a smart device group A to a smart device group F. The smart device group A includes {smart device 1001, smart device 1002}. The smart device group B includes {smart device 1004, smart device 1005, smart device 1006}. The smart device group C includes {smart device 1003, smart device 1007, smart device 1008, smart device 1009}. The smart device group D includes {smart device 1001, smart device 1003, smart device 1007}. The smart device group E includes {smart device 1008, smart device 1009}. The smart device group F includes {smart device 1010, smart device 1011, smart device 1012}.

When determining that the trigger condition of the scenario X is met, a cloud server generates a batch-control instruction. The batch-control instruction is used to control {smart device 1001, smart device 1002, smart device 1003, smart device 1007 to smart device 1011} to start. The cloud server delivers the batch-control instruction to the gateway. Alternatively, the cloud server delivers the batch-control instruction to the gateway via a home hub device. The smart device group A, the smart device group C, the smart device group D, and the smart device group E are subsets of {smart device 1001, smart device 1002, smart device 1003, smart device 1007 to smart device 1011}. After receiving the batch-control instruction used to control start of the eight smart devices in batches, the gateway selects a smart device group from the smart device group A, the smart device group C, the smart device group D, and the smart device group E to deliver a group-control instruction.

As shown in FIG. 10, in Case 1, the gateway may select the smart device group A and the smart device group C. After selecting the smart device group A and the smart device group C, the gateway sends the group-control instruction to each of the smart device group A and the smart device group C, so that the smart device group A and the smart device group C separately perform the target operation. Finally, a single-control instruction is sent to each of the smart device 1010 and the smart device 1011, so that the smart device 1010 and the smart device 1011 separately perform the target operation. A selection sequence in which the gateway selects the smart device group A and the smart device group C is not limited in this application.

As shown in FIG. 10, in Case 2, the gateway may alternatively select the smart device group A, the smart device group D, and the smart device group E, and send the group-control instruction to each of the smart device group A, the smart device group D, and the smart device group E, so that the smart device group A, the smart device group D, and the smart device group E separately perform the target operation. Finally, a single-control instruction is sent to each of the smart device 1010 and the smart device 1011, so that the smart device 1010 and the smart device 1011 separately perform the target operation. A selection sequence in which the gateway selects the smart device group A, the smart device group D, and the smart device group E is not limited in this application.

Optionally, each time the gateway selects a smart device group, the gateway may send a group-control instruction to the smart device group selected this time. After sending the group-control instruction to the selected smart device group, the gateway selects a next smart device group. For example, in Case 1 in FIG. 10, after selecting the smart device group C, the gateway sends the group-control instruction to the smart device group C. After sending the group-control instruction to the smart device group C, the gateway selects the smart device group A, and then sends the group-control instruction to the smart device group A.

Optionally, after selecting all the smart device groups, the gateway may deliver the group-control instruction to each of the selected smart device groups. For example, in Case 1 in FIG. 10, after selecting the smart device group C and the smart device group A, the gateway sends the group-control instruction to each of the smart device group C and the smart device group A.

In a possible implementation, the gateway may select, according to a shortest path principle, M smart device groups from the created smart device groups. The shortest path principle is a principle of minimizing quantities of group-control instructions and single-control instructions that are sent by the gateway. This helps reduce a chasing effect.

For example, in Case 1 shown in FIG. 10, the gateway needs to deliver two group-control instructions and two single-control instructions, which are four instructions in total. In Case 2 shown in FIG. 10, the gateway needs to deliver three group-control instructions and two single-control instructions, which are five instructions in total. Therefore, a path in Case 1 is shorter than a path in Case 2, and the gateway performs Case 1.

The following describes several specific implementations in which the gateway selects, according to the shortest path principle, the M smart device groups from the created smart device groups.

Manner 1: An i^{th} selected smart device group in the M smart device groups is a smart device group that is in one or more target device groups and that includes a largest quantity of smart devices that are not selected to perform the target operation. The target device group is a smart device group in the created smart device groups. A smart device included in the target device group belongs to a subset of N smart devices, and i is greater than 0 and less than or equal to M. This ensures that the shortest path principle is satisfied, and quantities of group-control instructions and single-control instructions that are sent by the gateway are minimized by the M selected smart device groups.

For example, each time the gateway selects a smart device group, the gateway sends a group-control instruction to the smart device group selected this time. The gateway may first select a first smart device group from the created smart device groups. Smart devices included in the first smart device group are a subset of the N smart devices. The first smart device group is a device group with a largest quantity of smart devices in the one or more target device groups. The gateway sends the group-control instruction to the first smart device group, so that the first smart device group performs the target operation.

Then, the gateway selects a second smart device group from the created smart device groups. The second smart device group is a smart device group that is in the one or more target device groups and that includes a largest quantity of smart devices that are not selected to perform the target operation. The gateway sends the group-control instruction to the second smart device group, so that the second smart device group performs the target operation.

If no remaining device other than the first smart device group and the second smart device group exists in the N smart devices, the process ends.

If a remaining device other than the first smart device group and the second smart device group exists in the N smart devices, and the remaining smart device does not belong to any created smart device group or a smart device included in a smart device group to which the remaining device belongs does not belong to a subset of the N smart devices, the gateway delivers a single-control instruction to the remaining smart device, so that the remaining smart device performs the target operation.

If a remaining device other than the first smart device group and the second smart device group exists in the N smart devices, and a smart device included in a smart device group to which the remaining device belongs belongs to a subset of the N smart devices, the gateway continues to select, from the one or more target device groups, a smart device group that includes a largest quantity of smart devices that are not selected to perform the target operation, until a smart device that is in the N smart devices and that is included in the smart device group to which the remaining smart device that does not perform the target operation belongs does not belong to a subset of the N smart devices, or until the remaining smart device that is in the N smart devices and that does not perform the target operation does not belong to any created smart device group.

For example, as shown in FIG. 10, it is assumed that the batch-control instruction is used to control {smart device 1001, smart device 1002, smart device 1003, smart device 1007 to smart device 1011} to perform the target operation. FIG. 10 shows the smart device groups created on the gateway. The smart device group A, the smart device group C, the smart device group D, and the smart device group E are subsets of {smart device 1001, smart device 1002, smart device 1003, smart device 1007 to smart device 1011}. Therefore, the gateway first selects a smart device group with a largest quantity of hit devices from the smart device group A, the smart device group C, the smart device group D, and the smart device group E. In other words, the gateway first selects the smart device group C. The gateway sends the group-control instruction to the smart device group C, so that the smart device group C performs the target operation.

After the gateway sends the group-control instruction to the smart device group C, the remaining {smart device 1001, smart device 1002, smart device 1010, smart device 1011} have not performed the target operation. The smart device group A and the smart device group D include smart devices that are not selected to perform the target operation. Because a quantity of smart devices that are not selected to perform the target operation in the smart device group A is greater than a quantity of smart devices that are not selected to perform the target operation in the smart device group D, the gateway selects the smart device group A. The gateway sends the group-control instruction to the smart device group A, so that the smart device group A performs the target operation.

After the gateway sends the group-control instruction to the smart device group A, the remaining {smart device 1010, smart device 1011} have not performed the target operation. The smart device group F to which smart device 1010 and smart device 1011 belong is not a subset of {smart device 1001, smart device 1002, smart device 1003, smart device 1007 to smart device 1011}. Therefore, the gateway delivers a single-control instruction to each of the smart device 1010 and the smart device 1011, to separately control the smart device 1010 and the smart device 1011 to perform the target operation.

Optionally, after delivering the group-control instruction to the smart device group, the gateway may mark the smart device group to which the group-control instruction has been delivered as having performed the target operation. In this way, the gateway can more quickly identify which device has performed the target operation. This facilitates selection of a next smart device group.

A principle of selecting the M smart device groups by the gateway in a case in which the gateway delivers the group-control instruction to each of a plurality of selected smart device groups after selecting all the smart device groups is the same as that in a case in which each time the gateway selects a smart device group, the gateway sends the group-control instruction to the smart device group selected this time. Details are not described herein again.

Manner 2: The gateway may alternatively first determine all paths used to control the N smart devices, and then select a shortest path for execution. As shown in FIG. 10, it is assumed that the batch-control instruction is used to control {smart device 1001, smart device 1002, smart device 1003, smart device 1007 to smart device 1011} to perform the target operation. FIG. 10 shows the smart device groups created on the gateway. The smart device group A, the smart device group C, the smart device group D, and the smart device group E are subsets of {smart device 1001, smart device 1002, smart device 1003, smart device 1007 to smart device 1011}. The gateway may determine two paths. One path is shown in Case 1 in FIG. 10. The other path is shown in Case 2 in FIG. 10. The path shown in Case 1 is the shortest. Therefore, the gateway selects the path shown in Case 1. To be specific, the gateway selects the smart device group A and the smart device group C, sends the group-control instruction to each of the smart device group A and the smart device group C, and sends the single-control instruction to each of the smart device 1010 and the smart device 1011.

It should be noted that, in FIG. 5 and FIG. 9, an example in which the method is performed by the home hub device, the cloud server, and the gateway is used. In this application, the method is not uniquely limited to being performed by the home hub device, the cloud server, and the gateway. Correspondingly, the method may alternatively be performed by any plurality of devices, chips, or software modules that can be provided to implement the method, or a combination thereof.

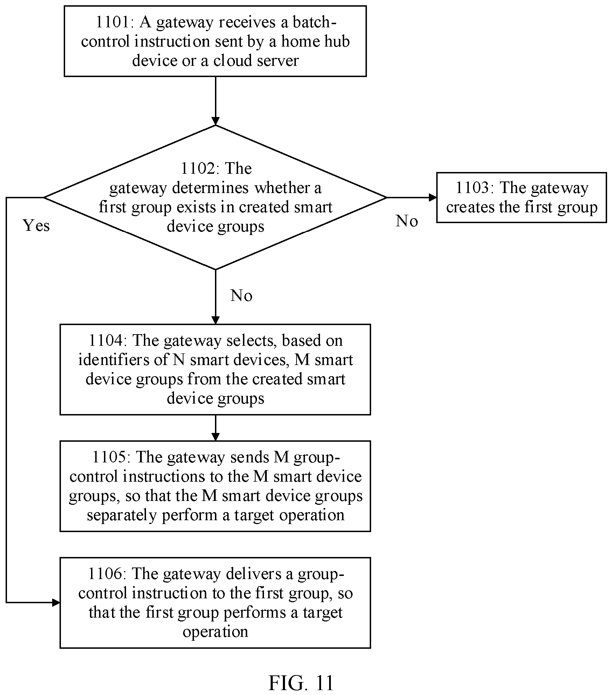

FIG. 11 is a schematic flowchart of still another smart device control method according to an embodiment of this application. In the method described in FIG. 11, when a gateway receives a batch-control instruction used to control N smart devices to perform a target operation, if a first group that includes only the N smart devices is not created in advance on the gateway, the gateway may automatically create the first group, so that the gateway may directly perform group control on the first group next time, thereby avoiding a chasing effect. In addition, when the first group is not created in advance on the gateway, the gateway may alternatively select M smart device groups for group control. This helps avoid a chasing effect.

1101: The gateway receives the batch-control instruction sent by a home hub device or a cloud server. The batch-control instruction is used to control the N smart devices to perform the target operation, and the batch-control instruction carries identifiers of the N smart devices. N is an integer greater than 1.

1102: The gateway determines whether the first group exists in created smart device groups. The first group includes the N smart devices, and does not include a device other than the N smart devices. If the first group does not exist in the created smart device groups, step 1103 and step 1104 are performed. If the first group exists in the created smart device groups, step 1106 is performed.

In this embodiment of this application, after receiving the batch-control instruction, the gateway performs step 1102, and performs step 1103 and step 1104 when determining that the first group does not exist in the created smart device groups. An execution sequence of steps 1103 and 1104 is not limited. For example, step 1103 and step 1104 may be simultaneously performed. Alternatively, step 1104 may be performed first, and then step 1103 is performed. Alternatively, step 1103 may be performed first, and then step 1104 is performed.

1103: The gateway creates the first group.

The first group is created. When receiving a batch-control instruction used to control the N smart devices in batches next time, the gateway may directly deliver a group-control instruction to the first group, to simultaneously control the N smart devices. This avoids the chasing effect.

1104: The gateway selects, based on the identifiers of the N smart devices, M smart device groups from the created smart device groups. Each of the M smart device groups includes one or more smart devices. The one or more smart devices included in each smart device group are a subset of the N smart devices. M is an integer greater than 0.

1105: The gateway sends M group-control instructions to the M smart device groups, so that the M smart device groups separately perform the target operation.

In this embodiment of this application, for specific implementations of step 1104 and step 1105, refer to the specific implementations of step 502 and step 503. Details are not described herein again.

In this embodiment of this application, after the gateway receives the batch-control instruction, if the first group does not exist on the gateway, it takes a long time for the gateway to create the first group. Consequently, if the gateway delivers the group-control instruction to the first group after creating the first group, a waiting time of a user is long. However, if the N smart devices are controlled in a single-control manner, the chasing effect is caused. Therefore, after the gateway receives the batch-control instruction, if the first group does not exist on the gateway, step 1104 and step 1105 may be performed, so that the N smart devices perform the target operation. In this way, the chasing effect can be avoided to some extent.

Optionally, in a case in which time spent in performing step 1103 is acceptable, steps 1104 and 1105 may alternatively be skipped, and the group-control instruction is directly delivered to the first group after step 1103 is performed.

1106: The gateway delivers a group-control instruction to the first group, so that the first group performs the target operation.

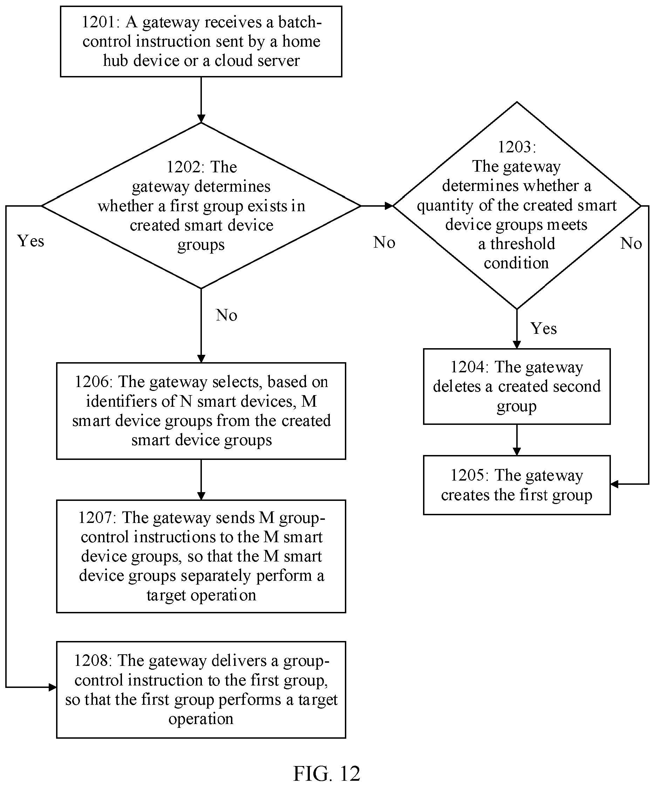

FIG. 12 is a schematic flowchart of still another smart device control method according to an embodiment of this application. In the method described in FIG. 12, in a case in which a first group does not exist in created smart device groups, a gateway first determines whether a quantity of the created smart device groups meets a threshold condition, and creates the first group only if the quantity of the created smart device groups meets the threshold condition. If the threshold condition is not met, a created smart device group is deleted first, and then the first group is created. This helps avoid insufficient storage space caused by an excessive quantity of smart device groups created on the gateway.

1201: The gateway receives a batch-control instruction sent by a home hub device or a cloud server. The batch-control instruction is used to control N smart devices to perform a target operation, and the batch-control instruction carries identifiers of the N smart devices. N is an integer greater than 1.

1202: The gateway determines whether the first group exists in the created smart device groups. The first group includes the N smart devices, and does not include a device other than the N smart devices. If the first group does not exist in the created smart device groups, step 1203 to step 1206 are performed. If the first group exists in the created smart device groups, step 1208 is performed.

1203: The gateway determines whether the quantity of the created smart device groups meets the threshold condition. If the quantity of the created smart device groups meets the threshold condition, step 1204 is performed. If the quantity of the created smart device groups does not meet the threshold condition, step 1205 is performed.

1204: The gateway deletes a created second group. The second group is one of the created smart device groups.

In this embodiment of this application, after deleting the created second group, the gateway performs step 1205.

In a possible implementation, the second group is a smart device group that is in the created smart device groups and that executes the group-control instruction for a smallest quantity of times. This possible implementation helps avoid a case in which the gateway deletes a smart device group frequently used by a user, and consequently the deleted smart device group is subsequently re-created.

For example, it is assumed that the smart device groups created on the gateway include a smart device group 1 to a smart device group 10. If a quantity of times that the smart device group 1 executes the group-control instruction is the smallest, the gateway deletes the smart device group 1 and creates the first group.

Optionally, if a plurality of smart device groups in the created smart device groups execute the group-control instruction for a smallest quantity of times, the second group is a smart device group that is in the plurality of smart device groups and that is created earliest. This optional implementation helps avoid a case in which the gateway deletes a smart device group frequently used by a user, and consequently the deleted smart device group is subsequently re-created.

For example, it is assumed that the smart device groups created on the gateway include a smart device group 1 to a smart device group 10. The smart device group 1 and the smart device group 2 execute the group-control instruction for a smallest quantity of times. If creation time of the smart device group 1 is earlier than creation time of the smart device group 2, the gateway deletes the smart device group 1 and creates the first group.

In a possible implementation, the second group is a smart device group that is in the created smart device groups and that executes the group-control instruction for a smallest quantity of times within a recent preset time period. This possible implementation helps avoid a case in which the gateway deletes a smart device group frequently used by a user, and consequently the deleted smart device group is subsequently re-created.

For example, a recent preset time period may be the last 10 days, the last half month, the last month, the last half year, the last one year, or the like. For example, the recent preset time period is the last month. It is assumed that the smart device groups created on the gateway include a smart device group 1 to a smart device group 10. If a quantity of times that the smart device group 1 executes the group-control instruction is the smallest in the last month, the gateway deletes the smart device group 1 and creates the first group.

Optionally, if a plurality of smart device groups in the created smart device groups execute the group-control instruction for the smallest quantity of times within a recent preset time period, the second group is a smart device group that is in the plurality of smart device groups and that is created earliest.

1205: The gateway creates the first group.

Optionally, after creating the first group, the gateway may record creation time of the first group.

1206: The gateway selects, based on the identifiers of the N smart devices, M smart device groups from the created smart device groups. Each of the M smart device groups includes one or more smart devices. The one or more smart devices included in each smart device group are a subset of the N smart devices. M is an integer greater than 0.

1207: The gateway sends M group-control instructions to the M smart device groups, so that the M smart device groups separately perform the target operation.

In this embodiment of this application, for specific implementations of step 1206 and step 1207, refer to the specific implementations of step 502 and step 503. Details are not described herein again.

1208: The gateway delivers a group-control instruction to the first group, so that the first group performs the target operation.

Optionally, after delivering the group-control instruction to the first group, the gateway may increase a recorded quantity of times that the first group executes the group-control instruction by one.

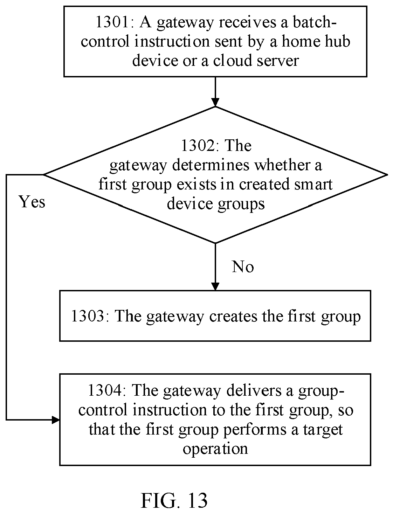

FIG. 13 is a schematic flowchart of still another smart device control method according to an embodiment of this application. In the method described in FIG. 13, when a gateway receives a batch-control instruction used to control N smart devices to perform a target operation, if a first group that includes only the N smart devices is not created in advance on the gateway, the gateway may automatically create the first group, so that the gateway may directly perform group control on the first group next time, thereby avoiding a chasing effect.

1301: The gateway receives the batch-control instruction sent by a home hub device or a cloud server. The batch-control instruction is used to control the N smart devices in batches to perform the target operation. N is an integer greater than 1.

1302: The gateway determines whether the first group exists in created smart device groups. The first group includes the N smart devices, and does not include a device other than the N smart devices. If the first group does not exist in the created smart device groups, step 1303 is performed. If the first group exists in the created smart device groups, step 1304 is performed.

In this embodiment of this application, after receiving the batch-control instruction, the gateway performs step 1302.

Optionally, if the first group does not exist in the created smart device groups, in addition to performing step 1303, the gateway may further send a single-control instruction to each smart device in the N smart devices, to separately control the smart device in the N smart devices to perform the target operation. Alternatively, if the first group does not exist in the created smart device groups, in addition to performing step 1303, the gateway may perform step 502 and step 503 in FIG. 5. Alternatively, if the first group does not exist in the created smart device groups, in a case in which time spent in performing step 1303 is acceptable, the group-control instruction may be directly delivered to the first group after step 1303 is performed.

1303: The gateway creates the first group.

The first group is created. When receiving a batch-control instruction used to control the N smart devices in batches next time, the gateway may directly deliver a group-control instruction to the first group, to simultaneously control the N smart devices. This helps avoid the chasing effect.

1304: The gateway delivers the group-control instruction to the first group, so that the first group performs the target operation.

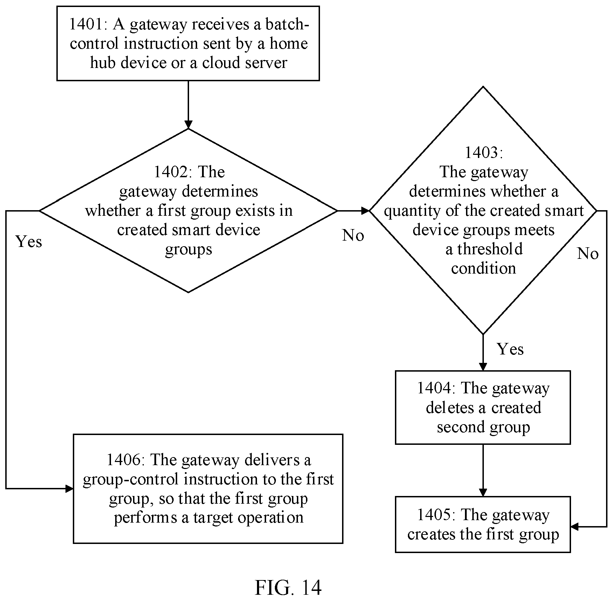

FIG. 14 is a schematic flowchart of still another smart device control method according to an embodiment of this application. In the method described in FIG. 14, in a case in which a first group does not exist in created smart device groups, a gateway first determines whether a quantity of the created smart device groups meets a threshold condition, and creates the first group only if the quantity of the created smart device groups meets the threshold condition. If the threshold condition is not met, a created smart device group is deleted first, and then the first group is created. This helps avoid insufficient storage space caused by an excessive quantity of smart device groups created on the gateway.

1401: The gateway receives a batch-control instruction sent by a home hub device or a cloud server. The batch-control instruction is used to control N smart devices in batches to perform a target operation. N is an integer greater than 1.

1402: The gateway determines whether the first group exists in created smart device groups. The first group includes the N smart devices, and does not include a device other than the N smart devices. If the first group does not exist in the created smart device groups, step 1403 is performed. If the first group exists in the created smart device groups, step 1406 is performed.

After receiving the batch-control instruction, the gateway performs step 1402.

1403: The gateway determines whether the quantity of the created smart device groups meets the threshold condition. If the quantity of the created smart device groups meets the threshold condition, step 1404 is performed. If the quantity of the created smart device groups does not meet the threshold condition, step 1405 is performed.

1404: The gateway deletes a created second group. The second group is one of the created smart device groups.

In this embodiment of this application, after deleting the created second group, the gateway performs step 1405.

In a possible implementation, the second group is a group that is in the created smart device groups and that executes the group-control instruction for a smallest quantity of times. This possible implementation helps avoid a case in which the gateway deletes a smart device group frequently used by a user, and consequently the deleted smart device group is subsequently re-created.

Optionally, if a plurality of smart device groups in the created smart device groups execute the group-control instruction for a smallest quantity of times, the second group is a group that is in the plurality of smart device groups and that is created earliest. This optional implementation helps avoid a case in which the gateway deletes a smart device group frequently used by a user, and consequently the deleted smart device group is subsequently re-created.

In a possible implementation, the second group is a group that is in the created smart device groups and that executes the group-control instruction for a smallest quantity of times within a recent preset time period. This possible implementation helps avoid a case in which the gateway deletes a smart device group frequently used by a user, and consequently the deleted smart device group is subsequently re-created.

Optionally, if a plurality of smart device groups in the created smart device groups execute the group-control instruction for the smallest quantity of times within a recent preset time period, the second group is a group that is in the plurality of smart device groups and that is created earliest. This optional implementation helps avoid a case in which the gateway deletes a smart device group frequently used by a user, and consequently the deleted smart device group is subsequently re-created.

1405: The gateway creates the first group.

1406: The gateway delivers a group-control instruction to the first group, so that the first group performs the target operation.

For specific implementations of step 1405 and step 1406, refer to the descriptions in the embodiment corresponding to FIG. 13. Details are not described herein again.

It should be noted that, in FIG. 11 and FIG. 14, an example in which the method is performed by the gateway is used. In this application, the method is not uniquely limited to being performed by the gateway. Correspondingly, the method may alternatively be performed by any plurality of devices, chips, or software modules that can be provided to implement the method, or a combination thereof.

An embodiment of this application further provides a computer-readable storage medium. The computer-readable storage medium stores computer-executable instructions. When the computer-executable instructions are executed, the methods performed by the gateway in the foregoing method embodiments are implemented.

An embodiment of this application further provides a computer program product. The computer program product includes a computer program. When the computer program is executed, the methods performed by the gateway in the foregoing method embodiments are implemented.

All or some of the foregoing embodiments may be implemented by using software, hardware, firmware, or any combination thereof. When software is used to implement the embodiments, all or a part of the embodiments may be implemented in a form of computer program product. The computer program product includes one or more computer programs or instructions. When the computer programs or instructions are loaded and executed on a computer, the procedures or functions in embodiments of this application are all or partially performed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk drive, or a magnetic tape; may be an optical medium, for example, a DVD; or may be a semiconductor medium, for example, a solid-state drive (solid-state disk, SSD).

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

Numerals used in embodiments of this application are merely used for differentiation for ease of description, but do not limit the scope of embodiments of this application. Sequence numbers of the foregoing processes do not mean an execution sequence, and the execution sequence of the processes should be determined based on functions and internal logic of the processes.

The descriptions of the embodiments provided in this application may be mutually referenced, and the descriptions of the embodiments have different focuses. For a part not described in detail in an embodiment, refer to the related descriptions in another embodiment. For ease of description and brevity, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A smart device control method, applied to a first electronic device, wherein the method comprises:
receiving a batch-control instruction, wherein the batch-control instruction is used to control N smart devices to perform a target operation, the batch-control instruction carries identifiers of the N smart devices, and N is an integer greater than 1;
selecting, based on the identifiers of the N smart devices, M smart device groups from created smart device groups, wherein each of the M smart device groups comprises one or more smart devices, the one or more smart devices comprised in each smart device group are a subset of the N smart devices, and M is an integer greater than 0; and
sending M group-control instructions to the M smart device groups, so that the M smart device groups separately perform the target operation.

2. The method according to claim 1, wherein the method further comprises:
if a remaining smart device other than the M smart device groups exists in the N smart devices, sending a single-control instruction to the remaining smart device, so that the remaining smart device performs the target operation, wherein the remaining smart device does not belong to any created smart device group, or a smart device comprised in a created smart device group to which the remaining smart device belongs does not belong to the subset of the N smart devices.

3. The method according to claim 1 or 2, wherein the M smart device groups are selected from the created smart device groups according to a shortest path principle, and the shortest path principle is a principle of minimizing a sum of quantities of sent group-control instructions and single-control instructions.

4. The method according to any one of claims 1 to 3, wherein an i^{th} selected smart device group in the M smart device groups is a smart device group that is in one or more target device groups and that comprises a largest quantity of smart devices that are not selected to perform the target operation, the target device group is a smart device group in the created smart device groups, a smart device comprised in the target device group belongs to the subset of the N smart devices, and i is an integer greater than 0 and less than or equal to M.

5. The method according to any one of claims 1 to 3, wherein the created smart device groups comprise a smart device group created based on a tag of a smart device.

6. The method according to claim 5, wherein the method further comprises:
receiving device information sent by a second electronic device, wherein the device information comprises identifiers of P smart devices and a tag corresponding to each of the P smart devices, and P is an integer greater than 1; and
creating, based on the tag corresponding to each smart device, a smart device group corresponding to the tag, wherein a smart device in the P smart devices is comprised in a smart device group corresponding to a tag of the smart device.

7. The method according to claim 5 or 6, wherein the method further comprises:
receiving a device adding instruction, wherein the device adding instruction indicates to add a target smart device and indicates a tag of the target smart device;
in response to the device adding instruction, adding the target smart device to the first electronic device; and
if a smart device group corresponding to the tag of the target smart device exists, adding the target smart device to the smart device group corresponding to the tag of the target smart device; or
if a smart device group corresponding to the tag of the target smart device does not exist, creating the smart device group corresponding to the tag of the target smart device, wherein the target smart device is comprised in the smart device group corresponding to the tag of the target smart device.

8. The method according to any one of claims 1 to 3, wherein the method further comprises:
receiving group information sent by a second electronic device, wherein the group information comprises identifiers of Q smart device groups created by the second electronic device based on a tag of a smart device and an identifier of a smart device comprised in each of the Q smart device groups, and Q is a positive integer; and
creating the Q smart device groups based on the group information.

9. The method according to any one of claims 5 to 8, wherein the tag comprises one or more of the following: a room in which the smart device is mounted, a mounting position of the smart device, an illumination area of the smart device, a type of the smart device, or a function of the smart device.

10. The method according to any one of claims 1 to 9, wherein after the receiving a batch-control instruction, the method further comprises:
in response to the batch-control instruction, determining whether a first group exists in the created smart device groups, wherein the first group comprises the N smart devices and does not comprise a device other than the N smart devices; and
if the first group does not exist in the created smart device groups, creating the first group; or
if the first group exists in the created smart device groups, delivering a group-control instruction to the first group, so that the first group performs the target operation; and
the selecting, based on the identifiers of the N smart devices, M smart device groups from created smart device groups comprises:
if the first group does not exist in the created smart device groups, selecting, based on the identifiers of the N smart devices, the M smart device groups from the created smart device groups.

11. The method according to claim 10, wherein the creating the first group comprises:
if a quantity of the created smart device groups does not meet a threshold condition, creating the first group.

12. The method according to claim 11, wherein the method further comprises:
if the quantity of the created smart device groups meets the threshold condition, creating the first group after a created second group is deleted, wherein the second group is one of the created smart device groups.

13. The method according to claim 12, wherein the second group is a smart device group that is in the created smart device groups and that executes the group-control instruction for a smallest quantity of times.

14. The method according to claim 12, wherein if a plurality of smart device groups in the created smart device groups execute the group-control instruction for a smallest quantity of times, the second group is a smart device group that is in the plurality of smart device groups and that is created earliest.

15. An electronic device, comprising a processor and a memory, wherein the memory is configured to store a computer program, and the processor invokes the computer program to perform the method according to any one of claims 1 to 14.

16. A computer-readable storage medium, comprising computer instructions, wherein when the computer instructions are run on an electronic device, the electronic device is enabled to perform the device control method according to any one of claims 1 to 14.

17. A computer program product, wherein when the computer program product runs on a computer, the computer is enabled to perform the device control method according to any one of claims 1 to 14.
